# EUROPEAN PATENT APPLICATION

(11) **EP 4 295 996 A1**
(43) Date of publication of application: **27.12.2023**
(21) Application number: 21928953.5
(22) Date of filing: 01.03.2021
(51) Int. Cl.: B23Q 3/155, B23Q 3/157, B23Q 11/00

(54) **TOOL TRANSPORT DEVICE**

(71) Applicant: DMG Mori Co., Ltd., Yamatokoriyama-shi, Nara 639-1160 (JP)
(72) Inventor: TANAKA, Koji, Yamatokoriyama-shi, Nara 639-1160 (JP); YASUDA, Hiroshi, Yamatokoriyama-shi, Nara 639-1160 (JP); NAKAOKA, Hiromitsu, Yamatokoriyama-shi, Nara 639-1160 (JP)
(74) Representative: Isarpatent
(86) International application number: PCT/JP2021/007689
(87) International publication number: WO 2022/185375

(57) **Abstract**

A tool transport device (10) transporting a tool (T) between a machine tool (M) including a tool magazine (TM) holding a plurality of tools (T) and a tool storage device storing a plurality of tools includes a moving device (11) having a moving table (15) and moving on a path (14) or with no path to move the moving table (15) to a working position set for the tool magazine (TM) and a working position set for the tool storage device, a tool attachment/detachment robot (25) and an air blow device (30) arranged on the moving table (15), and a controller (50) controlling operations of the moving device (11), tool attachment/detachment robot (25), and air blow device (30). The air blow device (30) includes an air blow box (31) having an opening (32) for loading and unloading of the tool (T) and has therein a space able to receive the tool (T), and a pressurized air ejection unit ejecting pressurized air into the air blow box (31).

## Description

### Technical Field

0001 The present invention relates to a tool transport device that transports a tool between a machine tool including a tool magazine holding a plurality of tools and a tool storage device storing a plurality of tools.

### Background Art

0002 Japanese Unexamined Patent Application Publication No. 2009-131937 discloses a known machine tool that includes a tool changer with the tool magazine as mentioned above. This tool changer is disposed in the vicinity of the machine tool. This tool changer is configured to grip a tool stored in the tool magazine with a tool gripping member and attach the tool to a spindle of the machine tool and to grip a tool attached to the spindle with the tool gripping member and detach the tool from the spindle and then store the tool into the tool magazine.

0003 The tool gripping member is arranged to be movable between a tool receiving position and a tool transferring position and to be able to perform attachment/detachment of a tool at the tool receiving position and the tool transferring position. Further, the tool changer has a nozzle that is arranged to operate in conjunction with the tool gripping member and selectively ejects either air or oil toward the tool. The tool changer is configured to eject air toward a shank of the tool from the nozzle at a position before gripping of the tool with the tool gripping member and eject oil toward the shank of the tool from the nozzle at a position at which the tool is separated from the tool gripping member.

0004 According to the disclosure, this tool changer provides the following effects. That is to say, the ejection of air toward the shank of the tool from the nozzle at the position before gripping of the tool with the tool gripping member cleans the shank of the tool, e.g., removes foreign objects adhering to the shank of the tool. Therefore, disadvantages caused by adhering foreign objects sticking fast to the tool, such as deterioration of the accuracy in attaching the tool to the spindle for the next cutting and failure to pull out the tool from the spindle, are prevented. Further, the ejection of oil toward the shank of the tool from the nozzle at the position at which the tool is separated from the tool gripping member improves the lubricity of the shank of the tool and prevents rusting or the like on the shank of the tool.

### Citation List

### Patent Literature

0005 Patent Literature 1: Japanese Unexamined Patent Application Publication No. 2009-131937

### Summary of Invention

### Technical Problem

0006 In the field of machine tools as described above, unmanned continuous operation for a long period of time has been planned in recent years. Further, various kinds of machining are performed in one machine tool nowadays. On these backgrounds, the number of tools to be stored and prepared in the tool magazine is now extremely large. On the other hand, there is a natural limit to the tool capacity of the tool magazine because of an issue in the installation space for the tool magazine.

0007 Therefore, a machining system has been proposed in which a large-capacity tool storage device able to store a large number of tools is provided, a plurality of machine tools are arranged around the tool storage device, and a tool transport device is provided to transport a tool between a tool magazine of each machine tool and the tool storage device. In this machining system, it is possible to supply a tool necessary for each machine tool, from among the tools stored in the large-capacity tool storage device, to the tool magazine of the machine tool as necessary and as appropriate, which achieves both the unmanned continuous operation for a long period of time and the performance of various kinds of machining in one machine tool.

0008 By the way, chips produced in machining and coolant used in the machining adhere to the tool used in the machining. Therefore, if the tool is transported to the tool storage device by the tool transport device as it is, the adhering chips and coolant may fall off during the transport, which leads to the problem that the transport path of the tool transport device and the periphery of the transport path are contaminated by the fallen-off chips and coolant. Further, the adhering chips and coolant may also fall off in the tool storage device, which leads to the problem that the interior of the tool storage device is contaminated by the fallen-off chips and coolant.

0009 Similarly to the above-described conventional example, it is conceivable to eject air toward the tool to be transferred from the tool magazine to the tool transport device, thereby removing chips and coolant adhering to the tool. However, this measure results in the problem that the tool transfer area and the periphery of the tool transfer area are contaminated by the blown-off chips and coolant. Therefore, this measure is not a fundamental solution for protecting the transport path of the tool transport device and the periphery of the transport path from contamination by chips and coolant.

0010 The present invention has been achieved in view of the above-described circumstances, and an object of the invention is to provide a tool transport device which is able to, in transporting a tool received from a tool magazine, clean the tool without contaminating the periphery of the tool magazine with chips and coolant.

### Solution to Problem

0011 To solve the above-described problem, the present invention provides a tool transport device transporting a tool between a machine tool including a tool magazine holding a plurality of tools and a tool storage device storing a plurality of tools, including:
a moving device having a moving table and configured to move the moving table to a working position set for the tool magazine and a working position set for the tool storage device;
a tool attachment/detachment robot and an air blow device arranged on the moving table; and
a controller configured to control operations of the moving device, tool attachment/detachment robot, and air blow device,
wherein the air blow device has:
   an air blow box having an opening for loading and unloading of the tool and having therein a space able to receive the tool; and
   a pressurized air ejection unit configured to eject pressurized air into the air blow box.

0012 This tool transport device transports a tool, for example, between one or more machine tools each including a tool magazine holding a plurality of tools and a tool storage device storing a plurality of tools. More specifically, under control by the controller, the moving table of the moving device moves between the working position set for each tool magazine and the working position set for the tool storage device, and the tool attachment/detachment robot arranged on the moving table performs extraction of a tool and storage of a tool from and into a target tool magazine and performs extraction of a tool and storage of a tool from and into the tool storage device.

0013 In controlling the tool attachment/detachment robot to extract a tool from a target tool magazine, the controller loads the extracted tool into the air blow box through the opening and ejects pressurized air into the air blow box from the pressurized air ejection unit. Thereby, chips and coolant adhering to the extracted tool are blown off by the pressurized air so that the tool is cleaned. The thus cleaned tool is stored into the tool storage device by the tool transport device.

0014 Thus, in this tool transport device, a tool extracted from the tool magazine is cleaned and then transported to and stored into the tool storage device. This prevents the occurrence of the problem that chips and coolant fall off during the transport and contaminate the transport path and the periphery of the transport path.

0015 Note that the opening is preferably provided in a top surface of the air blow box. By virtue of gravity, this configuration prevents chips and coolant blown off from the tool by pressurized air from jumping out of the air blow box.

0016 The tool transport device may have a configuration in which the pressurized air ejection unit includes a nozzle body disposed in the air blow box so as to eject pressurized air supplied from a pressurized air supply source, and a control valve controlled by the controller so as to control supply of pressurized air to the nozzle body. With this configuration, pressurized air with a high flow velocity is ejected from the nozzle body that has a throttle. Therefore, chips and coolant are blown off more successfully, so that the tool is cleaned more effectively. Further, the supply of pressurized air to the nozzle body is controlled (ON and OFF) with the control valve. Therefore, it is possible to eject pressurized air from the nozzle body only when the tool is loaded in the air blow box, which prevents wasteful power consumption.

0017 The tool transport device may have a configuration in which the controller is configured to execute, as operations for extracting the tool from the tool magazine, at least a moving operation of moving the moving device to the working position set for the tool magazine, an extracting operation of causing the tool attachment/detachment robot to extract the tool from the tool magazine, a loading operation of causing the tool attachment/detachment robot to load the extracted tool into the air blow box, an ejecting operation of ejecting pressurized air from the nozzle body for a predetermined time by opening the control valve of the pressurized air ejection unit, an unloading operation of causing the tool attachment/detachment robot to unload the tool from the air blow box, and a stopping operation of stopping the ejection of pressurized air from the nozzle body by closing the control valve of the pressurized air ejection unit.

0018 Further, the tool transport device may have a configuration in which the controller is configured to execute the moving operation and the extracting operation sequentially, then execute the loading operation and the ejecting operation simultaneously or such that one of the loading operation and ejecting operation precedes the other one of the loading operation and ejecting operation but these operations overlap each other for a predetermined time, and then execute the unloading operation and the stopping operation simultaneously or such that one of the unloading operation and stopping operation precedes the other one of the unloading operation and stopping operation. With this configuration, the execution of the loading operation and the execution of the ejecting operation overlap each other and the execution of the unloading operation and the execution of the stopping operation overlap each other. This enables the entire tool to be cleaned more effectively and reduces the processing time for cleaning the tool.

0019 Further, the tool transport device may have a configuration in which the controller is configured to, in the loading operation, cause the tool attachment/detachment robot to rotate the tool about an axis of the tool for a predetermined time after loading the tool into the air blow box or a configuration in which the controller is configured to, in the loading operation, cause the tool attachment/detachment robot to reciprocate the tool in an axial direction of the tool for a predetermined time after loading the tool into the air blow box. Alternatively, the tool transport device may have a configuration in which the controller is configured to execute the rotating operation and the reciprocating operation sequentially in any order or simultaneously. These configurations enable chips and coolant adhering to the tool to be removed more effectively.

0020 Further, the tool transport device may have a configuration in which the air blow box has a discharge port open to a bottom surface thereof and the air blow device has, at a position under the air blow box, a filter member for capturing chips. With this configuration, among chips and coolant blown off from the tool by pressurized air, the chips that are solid objects are captured by the filter member, while the coolant that is purified by the filter member is collected through the discharge port of the air blow box.

### Advantageous Effects of Invention

0021 With the tool transport device according to the present invention, a tool extracted from the tool magazine is cleaned and then transported to and stored into the tool storage device; therefore, the occurrence of the problem that chips and coolant fall off during the transport and contaminate the transport path and the periphery of the transport path is prevented.

### Brief Description of Drawings

0022
FIG. 1 is a perspective view of a machining system according to an embodiment of the present invention, mainly showing a tool transport device of the machining system;
FIG. 2 is a perspective view of the machining system according to the embodiment, mainly showing a tool storage device of the machining system;

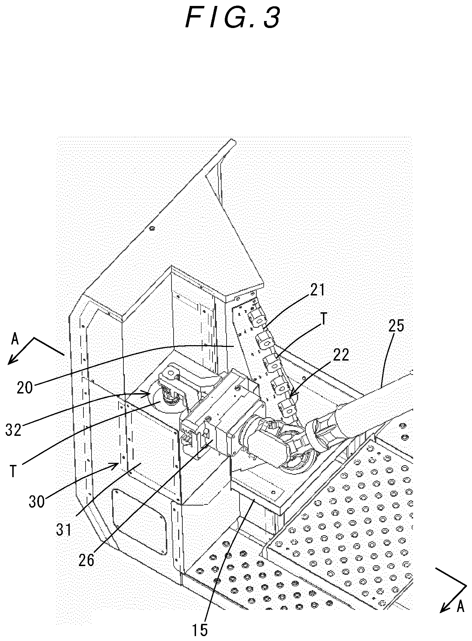

FIG. 3 is a perspective view mainly showing an air blow device in the embodiment; and
FIG. 4 is a sectional view of the air blow device taken along line A-A in FIG. 3.

### Description of Embodiments

0023

Hereinafter, a specific embodiment of the present invention will be described with reference to the drawings.

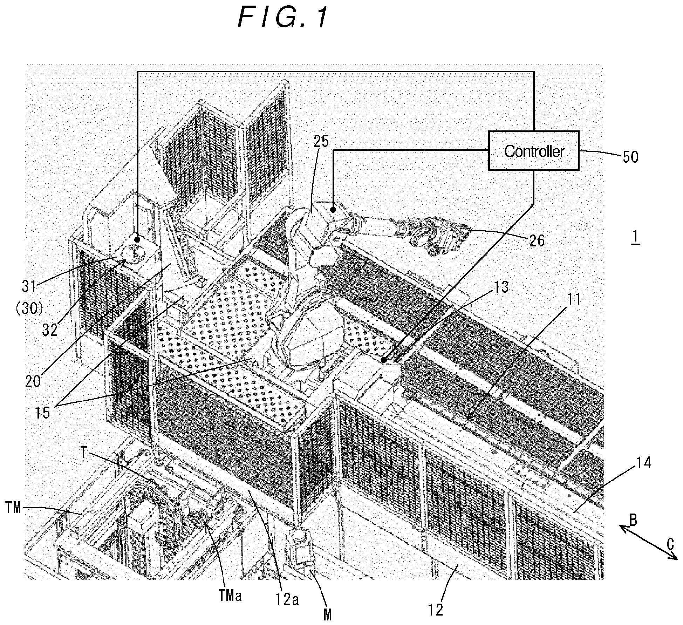

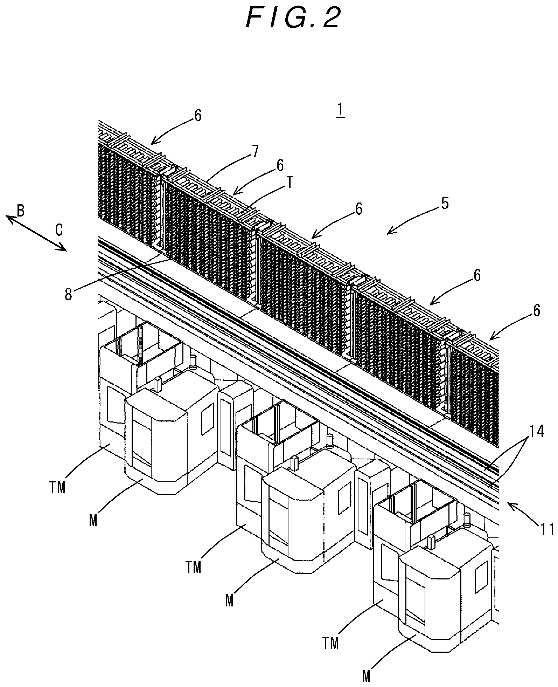

0024 As illustrated in FIGS. 1 and 2, the machining system 1 according to this embodiment includes a plurality of machine tools M, a tool storage device 5, and a tool transport device 10. The machine tools M are arranged in a row along the B-C direction. The tool storage device 5 has a plurality of tool storage racks 6 arranged in a row along the B-C direction so as to face the row of machine tools M. The tool transport device 10 is arranged between the row of machine tools M and the row of tool storage racks 6 to transport a tool T between the machine tools M and the tool storage racks 6. The machining system 1 illustrated in FIG. 1 extends in the direction of arrow C. The row of machine tools M and the row of tool storage racks 6 illustrated in FIG. 2 are arranged on the extension of the machining system 1. As a matter of course, the machining system 1 has an end of the arrangement in the direction of arrow C.

0025 Each machine tool M is provided with a tool magazine TM storing a plurality of tools T and is configured to perform predetermined machining using the tools T stored in the tool magazine TM. Each machine tool M includes a numerical controller (not illustrated). The numerical controller (not illustrated) numerically controls motion mechanism units and controls operation of the tool magazine TM.

0026 Each tool storage rack 6 consists of a plurality of holding frames 8 and a casing-like support frame 7. The holding frames 8 are erected at predetermined intervals along the B-C direction. The support frame 7 supports the holding frames 8. Each holding frame 8 has cutouts on both side faces thereof. The cutouts are arranged at predetermined pitches and are formed to be open outward. Tools T are engaged with and held by the cutouts in a state of being inserted in the cutouts.

0027 The tool transport device 10 has a moving device 11, a moving table 15, a temporary tool placement table 20, a tool attachment/detachment robot 25, an air blow device 30, and a controller 50. The moving device 11 is arranged along the B-C direction. The moving table 15 is moved by the moving device 11. The temporary tool placement table 20, the tool attachment/detachment robot 25, and the air blow device 30 are arranged on the moving table 15. The controller 50 controls operations of the moving device 11, tool attachment/detachment robot 25, and air blow device 30.

0028 The moving device 11 consists of a pair of guide rails 14, a support base 12, and a drive device 13. The guide rails 14 are arranged in parallel along the B-C direction to guide movement of the moving table 15. The support base 12 supports the guide rails 14. The drive device 13 moves the moving table 15.

0029 For example, the drive device 13 consists of a rack (not illustrated) arranged along the B-C direction on the support base 12, a pinion gear (not illustrated) arranged on the moving table 15, and a motor (not illustrated) driving the pinion gear (not illustrated). The pinion gear (not illustrated) meshes with the rack (not illustrated). The pinion gear (not illustrated) is rotated by the motor (not illustrated), so that the moving table 15 is guided by the guide rails 14 and moved along the B-C direction through the meshing between the pinion gear (not illustrated) and the rack (not illustrated).

0030 The position of the moving table 15 in the B-C direction is detected, for example, by a position detector (not illustrated) that consists of a scale (not illustrated) arranged along the B-C direction on the support base 12 and a reader (not illustrated) arranged on the moving table 15 to read a position on the scale (not illustrated). Under control by the controller 50, the moving table 15 is driven by the drive device 13 based on position information detected by the position detector (not illustrated) to move to a working position set for each machine tool M and a working position set for each tool storage rack 6. In this example, the position shown in FIG. 1 (the end position in the direction of arrow B) is the home position of the moving table 15. This position also serves as the working position for the tool magazine TM of the machine tool M disposed at the end in the direction of arrow B. The support base 12 has a landing 12a for maintenance formed thereon at this position. The landing 12a is formed on a portion corresponding to the tool magazine TM. If necessary, the landing 12a may be formed on a portion corresponding to each tool magazine TM.

0031 The robot 25 is composed of a six-axis articulated robot that has at the distal end of an arm thereof a hand 26 (end effector) for gripping a tool T. Under operation control by the controller 50, the hand 26 is moved to positions within a three-dimensional space and brought into poses. The hand 26 is composed of the so-called gripper that is able to grip an end of the tool T located on the side opposite to the cutting edge of the tool T.

0032 The temporary tool placement table 20 has a holding frame 21 that has a plurality of cutouts 22. The cutouts 22 are arranged at predetermined pitches in the vertical direction and formed to be open outward. Tools T are engaged with and held by the cutouts 22 in a state of being inserted in the cutouts 22. The temporary tool placement table 20 is disposed within the motion range of the hand 26 of the robot 25.

0033 The air blow device 30 has a rectangular air blow box 31, a rectangular collection box 36, a compressor 41 as a pressurized air supply source, a pipe 39, and a control valve 40. The collection box 36 is joined to a bottom surface of the air blow box 31. The control valve 40 is arranged in the middle of the pipe 39.

0034 The air blow box 31 has in a top surface thereof a top opening 32 for loading and unloading of a tool T and has a bottom opening 35 in the bottom surface thereof. Further, the air blow box 31 has two upper nozzles 33, 33 at upper positions and two lower nozzles 34, 34 at lower positions in the interior space thereof. One side of the pipe 39 is branched and connected to each nozzle 33, 33, 34, 34. The other side of the pipe 39 is connected to the compressor 41. The air blow box 31 is disposed within the motion range of the hand 26 of the robot 25.

0035 Thus, pressurized air is supplied from the compressor 41 to the nozzles 33, 33, 34, 34 through the pipe 39 and ejected from the nozzles 33, 33, 34, 34. The supply of pressurized air to the nozzles 33, 33, 34, 34 as well as stop of the supply are controlled by the control valve 40 that is controlled by the controller 50. In this example, the ejecting direction of each nozzle 33, 33, 34, 34 is set to a direction toward the center axis of the tool T loaded in the air blow box 31. However, the ejecting direction is not limited to this direction. The ejecting direction can be set appropriately to such a direction that chips and coolant adhering to the tool T are blown off effectively.

0036 The collection box 36 has in a top surface thereof an opening 37 formed to correspond to the bottom opening 35 formed in the air blow box 31. The interior space of the air blow box 31 and the interior space of the collection box 36 communicate with each other through the bottom opening 35 and the opening 37. The collection box 36 has a filter 38 therein that is arranged at an intermediate position in the vertical direction to divide the interior space of the collection box 36 into two in the vertical direction. The space below the filter 38 in the collection box 36 is connected to a collection path (not illustrated) formed appropriately to connect to a drain collection unit of the machine tool M.

0037 The controller 50 is composed of a computer including a CPU, a RAM, and a ROM and controls operations of the moving device 11, tool attachment/detachment robot 25, air blow device 30, and other elements as described above. The controller 50 operates the tool transport device 10 in accordance with a predetermined operation program to extract a commanded tool T from a commanded tool magazine TM and then transport the extracted tool T to store it into a commanded tool storage rack 6. Conversely, the controller 50 extracts a commanded tool T from a commanded tool storage rack 6 and then transports the extracted tool T to store it into a commanded tool magazine TM.

0038 In particular, specific operations for causing the tool transport device 10 to extract a specified tool T from a specified tool magazine TM and store the tool T into a specified tool storage rack 6 under control by the controller 50 are described here. It is assumed that information on the target tool magazine TM, the target tool storage rack 6, and the target storage position in the tool storage rack 6 as well as the operation commands (extraction command and storage command) are transmitted from a host management device (not illustrated) to the controller 50. Further, information on the tool T to be extracted and the extraction command are transmitted from the host management device (not illustrated) to the numerical controller (not illustrated) of the machine tool M including the target tool magazine TM. Upon receiving these command and information, the numerical controller (not illustrated) moves the commanded tool T from the tool magazine TM to a set entry/exit position TMa and then transmits an extraction preparation completion signal to the controller 50.

0039 Upon receiving the information on the target tool magazine TM, the target tool storage rack 6, and the target storage position in the tool storage rack 6 as well as the operation commands (extraction command and storage command) from the management device (not illustrated) as described above, the controller 50 first drives the drive device 13 of the moving device 11 to move the moving table 15 to the working position for the commanded tool magazine TM (moving operation). In this example, the moving table 15 is moved to the working position for the tool magazine TM shown in FIG. 1. Note that this position of the moving table 15 corresponds to the home position thereof. On the other hand, the numerical controller (not illustrated) of the machine tool M including the target tool magazine TM receives the information on the tool T to be extracted and the extraction command from the host management device (not illustrated). Thereafter, the numerical controller (not illustrated) drives the tool magazine TM to move the commanded tool T to the entry/exit position TMa shown in FIG. 1 and then transmits the extraction preparation completion signal to the controller 50.

0040 Subsequently, upon completing the moving operation and receiving the extraction preparation completion signal from the target numerical controller (not illustrated), the controller 50 drives the tool attachment/detachment robot 25 to grip the tool T moved to the entry/exit position TMa in the tool magazine TM with the hand 26 and extract the tool T from the tool magazine TM (extracting operation). Thereafter, the controller 50 transmits an extraction completion signal to the numerical controller (not illustrated). Where there are two or more tools T to be extracted that are commanded by the host management device (not illustrated), the numerical controller (not illustrated) repeatedly carries out the process of moving the tool T to be extracted next to the entry/exit position TMa and transmitting the extraction preparation completion signal to the controller 50 after receiving the extraction completion signal from the controller 50.

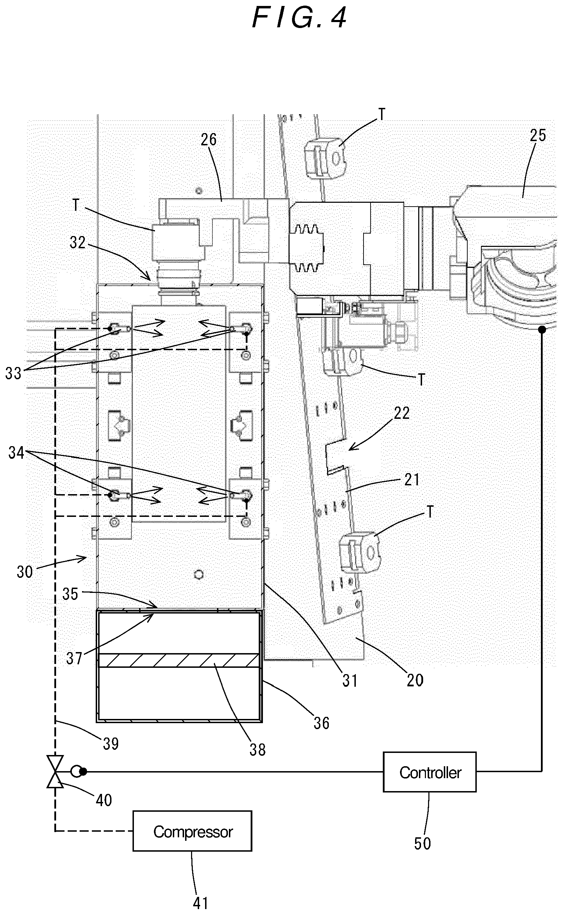

0041 Subsequently, as shown in FIG. 4, the controller 50 drives the robot 25 to load the tool T gripped with the hand 26 into the air blow box 31 through the top opening 32 of the air blow box 31 (loading operation) and opens the control valve 40 for a predetermined time to eject pressurized air from the nozzles 33, 33, 34, 34 (ejecting operation). Thereby, chips and coolant adhering to the tool T are blown off by the ejected flow of air. Consequently, the tool T is cleaned and the chips and coolant blown off fall down to be collected into the collection box 36 through the bottom opening 35 and the opening 37. The chips and coolant collected in the collection box 36 are subjected to solid-liquid separation by the filter 38. The chips are captured by the filter 38, while the coolant passes through the filter 38. The coolant is thereafter collected into the drain collection unit of the machine tool M through an appropriate collection path.

0042 After pressurized air is ejected from the nozzles 33, 33, 34, 34 for a predetermined time as described above, the controller 50 drives the tool attachment/detachment robot 25 to unload the tool T from the air blow box 31 (unloading operation). Thereafter, the controller 50 inserts the unloaded tool T into an empty cutout 22 of the temporary tool placement table 20 so that the tool T is held by the temporary tool placement table 20 (temporary placing operation), and closes the control valve 40 to stop the ejection of pressurized air from the nozzles 33, 33, 34, 34 (stopping operation). Where there are two or more tools T to be extracted that are commanded by the host management device (not illustrated), the controller 50 sequentially executes the extracting operation, the loading operation, the ejecting operation, the unloading operation, the temporary placing operation, and the stopping operation after receiving the extraction preparation completion signal from the numerical controller (not illustrated) for each of the tools to be extracted.

0043 After extracting the commanded tool T from the tool magazine TM, the controller 50 drives the drive device 13 of the moving device 11 to move the moving table 15 to the working position for the commanded tool storage rack 6 (transporting operation). Thereafter, the controller 50 drives the tool attachment/detachment robot 25 to store the tool T held on the temporary tool placement table 20 into the commanded storage position in the commanded tool storage rack 6 (storing operation). Where there are two or more tools T to be stored, this storing operation is executed for each tool T.

0044 Thus, the controller 50 extracts the commanded tool T from the commanded tool magazine TM and then stores the tool T into the commanded tool storage rack 6. Further, the controller 50 is able to do the reverse in order to extract a commanded tool T from a commanded tool storage rack 6 and store the tool T into a commanded tool magazine TM. In this process, since the tool T in the tool storage rack 6 is supposed to be kept clean, the loading operation, the ejecting operation, the loading operation, the temporary placing operation, and the stopping operation that are to be executed in order to clean the tool T can be omitted.

0045 As described above, the tool transport device 10 according to this embodiment is configured to clean a tool T extracted from the tool magazines TM with the air blow device 30 and then transport the tool T to the tool storage device 5 and store the tool T into the tool storage device 5. This prevents the occurrence of the problem that chips and coolant fall off during the transport and contaminate the transport path and the periphery of the transport path.

0046 Further, the tool T is loaded into the air blow box 31 through the top opening 32 formed in the top surface of the air blow box 31. By virtue of gravity, this configuration prevents chips and coolant blown off from the tool by pressurized air from jumping out of the air blow box.

0047 Further, in this example, pressurized air is ejected from the upper nozzles 33, 33 and lower nozzles respectively provided at the upper positions and lower positions in the interior of the air blow box 31. This configuration enables a flow of air with a high flow velocity to be ejected toward the tool T, so that the tool is cleaned more effectively. Further, the supply of pressurized air to the nozzles 33, 33, 34, 34 is controlled (ON and OFF) by the control valve 40 such that pressurized air is ejected from the nozzles 33, 33, 34, 34 only when the tool T is loaded in the air blow box 31. This configuration prevents waste of power.

0048 Above has been described an embodiment of the present invention. However, it should be noted that the present invention is not limited to the above-described embodiment and can be implemented in other manners.

0049 For example, the controller 50 in the above-described embodiment is configured to sequentially execute the loading operation, the ejecting operation, the unloading operation, the temporary placing operation, and the stopping operation as operations for cleaning a tool T. However, the present invention is not limited to this configuration. The controller may be configured to execute the loading operation and the ejecting operation simultaneously or such that one of the loading operation and ejecting operation precedes the other one of the loading operation and ejecting operation but these operations overlap each other for a predetermined time, and then execute the unloading operation and the stopping operation simultaneously or such that one of the unloading operation and stopping operation precedes the other one of the unloading operation and stopping operation. With this configuration, the execution of the loading operation and the execution of the ejecting operation overlap each other and the execution of the unloading operation and the execution of the stopping operation overlap each other, which enables the entire tool T to be cleaned more effectively and reduces the processing time for cleaning the tool T.

0050 Further, the controller 50 may be configured to, in the loading operation, cause the tool attachment/detachment robot 25 to rotate the tool T about an axis of the tool T for a predetermined time after loading the tool T into the air blow box 31. Alternatively, the controller 50 may be configured to cause the tool attachment/detachment robot 25 to reciprocate the tool T in an axial direction of the tool T for a predetermined time after loading the tool T into the air blow box 31. Alternatively, the controller 50 may be configured to execute the rotating operation and the reciprocating operation sequentially in any order or simultaneously. These configurations enable chips and coolant adhering to the tool T to be removed more effectively.

0051 Further, in the above-described embodiment, pressurized air is ejected from the nozzles 33, 33, 34, 34 that have a throttle. However, the present invention is not limited to this configuration. As long as the effect of removing chips and coolant adhering to the tool T is obtained, being apart from whether the effect is good or not, the ejection of pressurized air into the air blow box 31 may be carried out by connecting a pipe 31 to the air blow box 31 so that pressurized air is ejected into the air blow box 31 from an opening of the pipe 31.

0052 Further, the control valve 40 does not have to be provided if waste of power does not matter.

0053 Further, in the above-described embodiment, one execution of the extraction, transport, and storage targets one tool magazine TM and one tool storage rack. However, the present invention is not limited to this configuration. One execution of the extraction, transport, and storage may target two or more tool magazines TM and two or more tool storage racks 6. In such a case, commanded tools T are extracted through sequential movement to commanded tool magazines TM and then the commanded tools T are stored through sequential movement to commanded tool storage racks 6.

0054 The moving table 15 in the above-described embodiment is moved on the path formed by the guide rails 14. However, the present invention is not limited to this configuration. For example, the moving table 15 may be mounted on an automated guided vehicle and moved tracklessly by the automated guided vehicle.

0055 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims. Reference Signs List

0056
- 1: Machining system
- 5: Tool storage device
- 6: Tool storage rack
- 7: Support frame
- 8: Holding frame
- 10: Tool transport device
- 11: Moving device
- 12: Support base
- 13: Drive device
- 14: Guide rail
- 15: Moving table
- 20: Temporary placement table
- 21: Holding frame
- 22: Cutout
- 25: Tool attachment/detachment robot
- 26: Hand
- 30: Air blow device
- 31: Air blow box
- 32: Top opening
- 33: Upper nozzle
- 34: Lower nozzle
- 35: Bottom opening
- 36: Collection box
- 37: Opening
- 38: Filter
- 39: Pipe
- 40: Control valve
- 41: Compressor (Pressurized air supply source)
- 50: Controller
- M: Machine tool
- T: Tool

## Claims

1. A tool transport device transporting a tool between a machine tool including a tool magazine holding a plurality of tools and a tool storage device storing a plurality of tools, comprising:
a moving device having a moving table and configured to move the moving table to a working position set for the tool magazine and a working position set for the tool storage device;
a tool attachment/detachment robot and an air blow device arranged on the moving table; and
a controller configured to control operations of the moving device, tool attachment/detachment robot, and air blow device, **characterized in that** the air blow device has:
an air blow box having an opening for loading and unloading of the tool and having therein a space able to receive the tool; and
a pressurized air ejection unit configured to eject pressurized air into the air blow box.

2. The tool transport device according to claim 1, **characterized in that** the pressurized air ejection unit includes:
a nozzle body disposed in the air blow box so as to eject pressurized air supplied from a pressurized air supply source; and
a control valve controlled by the controller so as to control supply of pressurized air to the nozzle body.

3. The tool transport device according to claim 2, **characterized in that** the controller is configured to execute, as operations for extracting the tool from the tool magazine, at least a moving operation of moving the moving table to the working position set for the tool magazine, an extracting operation of causing the tool attachment/detachment robot to extract the tool from the tool magazine, a loading operation of causing the tool attachment/detachment robot to load the extracted tool into the air blow box, an ejecting operation of ejecting pressurized air from the nozzle body for a predetermined time by opening the control valve of the pressurized air ejection unit, an unloading operation of causing the tool attachment/detachment robot to unload the tool from the air blow box, and a stopping operation of stopping ejection of pressurized air from the nozzle body by closing the control valve of the pressurized air ejection unit.

4. The tool transport device according to claim 3, **characterized in that** the controller is configured to execute the moving operation and the extracting operation sequentially, then execute the loading operation and the ejecting operation simultaneously or such that one of the loading operation and ejecting operation precedes another one of the loading operation and ejecting operation but the loading operation and the ejecting operation overlap each other for a predetermined time, and then execute the unloading operation and the stopping operation simultaneously or such that one of the unloading operation and stopping operation precedes another one of the unloading operation and stopping operation.

5. The tool transport device according to claim 4, **characterized in that** the controller is configured to, in the loading operation, cause the tool attachment/detachment robot to rotate the tool about an axis of the tool for a predetermined time after loading the tool into the air blow box.

6. The tool transport device according to claim 4, **characterized in that** the controller is configured to, in the loading operation, cause the tool attachment/detachment robot to reciprocate the tool in an axial direction of the tool for a predetermined time after loading the tool into the air blow box.

7. The tool transport device according to any one of claims 1 to 6, **characterized in that**:
the air blow box has a discharge port open to a bottom surface thereof; and
the air blow device has, at a position under the air blow box, a filter member for capturing chips.
